# NEW EUROPEAN PATENT SPECIFICATION

(11) **EP 0 767 098 B2**
(45) Date of publication and mention of the opposition decision: **30.07.2003**
(45) Mention of the grant of the patent: 06.12.2000
(21) Application number: 96114773.3
(22) Date of filing: 16.09.1996
(51) Int. Cl.: B62D 33/07

(54) **Tire removing machine**
Reifendemontiergerät
Machine à démonter les pneumatiques

(30) Priority: 02.10.1995 IT MO950136; 23.10.1995 IT MO950148
(43) Date of publication of application: 09.04.1997
(73) Proprietor: SICAM S.r.l., 42015 Correggio (Reggio Emilia) (IT)
(72) Inventor: Magnani, Franco, 42015 Correggio (RE) (IT)
(74) Representative: Modiano, Guido, Dr.-Ing.

(56) References cited:
- DE-A- 3 801 838
- US-A- 4 742 859
- US-A- 4 765 387
- US-A- 4 840 215

## Description

The present invention relates to a tire removing machine comprising a burst protection device.

When performing work on motor vehicle wheels that entails removing the tire from the wheel and reinstalling it, a serious safety problem related to the inflation of said tire arises.

In case of bursting, the shock wave produced by the air that strikes the operator combines with the violent movement that the wheel undergoes under the thrust of said air.

The event becomes even more severe if the tearing of the tire occurs on the sidewall that is directed toward the worktable of the tire removing machine; said worktable becomes a wall for upward propulsive thrust both for the tire and for the wheel.

In order to solve this dangerous problem, straps are currently used whose corresponding ends are rigidly coupled to the tire removing machine and, after securing the tire in the upward region, are coupled by means of their diametrically opposite ends, with appropriate spring-catches, to an eyebolt that is anchored to the frame of said machine.

A strap device is known, for example, from the document US-4 742 859, which discloses the features from the preamble of claim 1.

Another means used to secure the tires is constituted by a frame that is made of metallic tubular material, is pivoted on one side to the footing of the tire removing machine, and has, on the other side, an engagement seat again for a safety strap which can in turn be rigidly coupled to said eyebolt.

However, it has been observed that due to the violence of the burst, said straps are absolutely insufficient to retain the wheel on the machine; when the burst occurs, said wheel in fact tends to squeeze between said straps, wedging between them, or even tears the eyebolt for coupling the closure spring-catches, even if said metal tube frame is used, or tears the very mesh of the straps, or strips the teeth of their windup mechanism, equally striking the operator, who must stay next to the tire removing machine in order to work on the tire.

Moreover, the operator, due to hurrying and to overconfidence caused by habitual use of the machine, sometimes deliberately does not use the safety straps, with imaginable consequences in case of bursting.

The aim of the present invention is to solve the above mentioned problems of the prior art, by providing a tire removing machine that is absolutely effective in case of intervention, is easy to operate, has a simple structure, and forces the operator to use it without any kind of exception.

This aim and other objects are achieved by a tire removing machine, comprising: the features of claim 1.

Further characteristics and advantages will become apparent from the description of a preferred embodiment of a tire removing machine, illustrated only by way of non-limitative example in the accompanying drawings, wherein:
figures 1 and 2 are views of a conventional tire removing machine, to which the protection device, manufactured according to two different embodiments, has been applied;
figure 3 is a detail view of a self-centering adapter body;
figure 4 is a detail view of said body in a configuration for intervention on a wheel;
figure 5 is a view of another embodiment of the burst protection device;
figures 6 and 7 are views of still another simplified embodiment of the presser means, respectively during preparation and during use.
figure 8 is a view of a conventional type of tire removing machine, to which a protection device manufactured according to a further embodiment has been applied;
figure 9 is a detail view of the protection device of figure 8 in its main components;
figures 10 and 11 are schematic sectional views of the protection device of two still further embodiments, both of which are shown in the configuration for acting on a wheel.

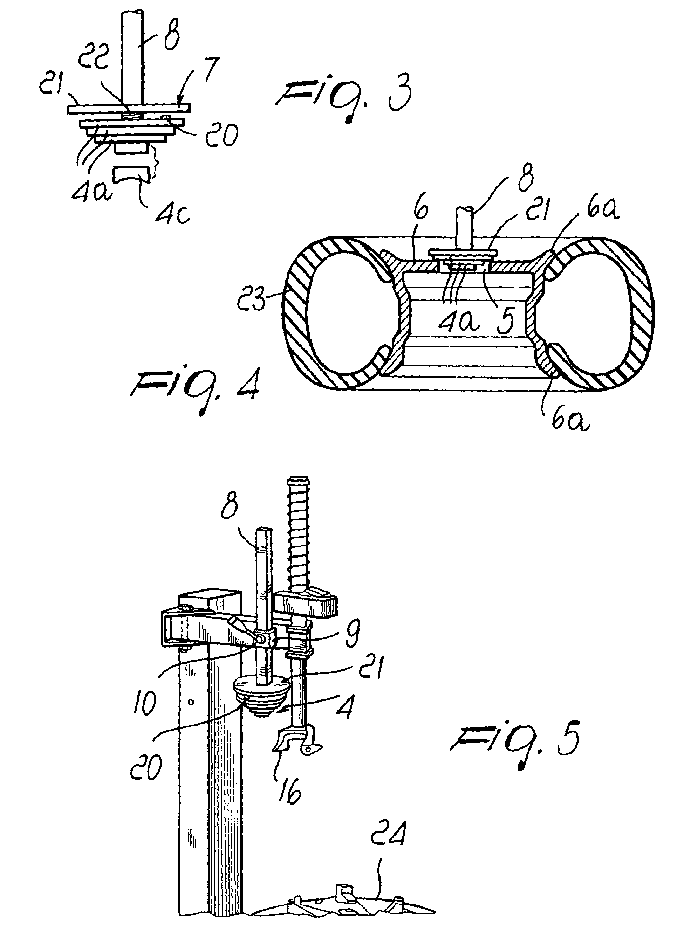

The claimed invention is shown by figures 2, 3 and 4, whereby the remaining figures comprise details which are not wholly covered by the claims.

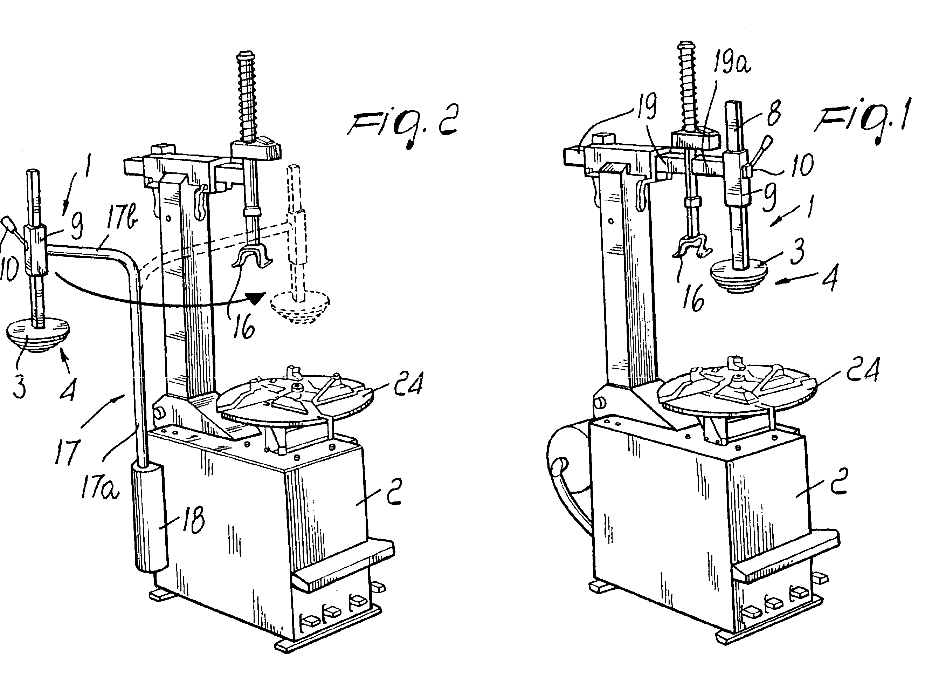

With reference to figures 1 to 7, the reference numeral 1 generally designates a wheel locking means of a burst protection device for tire removing machines 2, which is constituted by a presser means 3 that can be mounted, with corresponding elements that are better specified hereinafter, on said machines 2.

The presser means 3 is provided with a self-centering adapter body 4 which, in the preferred embodiment, can be snugly inserted coaxially in the central hole 5 of a wheel 6 that is normally provided for adapting to the hub.

Said presser means 3 is also provided with clearance signal-producing devices 7 that control the operation of the machine 2 only during the active intervention stage of said presser means.

The presser means 3 is substantially constituted by a straight rod 8 that is mounted, so that it is slidingly guided, in a vertical sleeve 9 which is in turn supported by corresponding means, described hereinafter, that are associated with the machine 2.

Said rod 8 supports the self-centering adapter 4 at its lowermost end, and the sleeve 9 is provided with conventional devices for locking the rod 8 therein, which are constituted for example by a clamp or vice, designated by the reference numeral 10 in the figures; as an alternative, a conventional hydraulic/pneumatic clamping unit can be used.

In a further possible embodiment of the presser means 3, said presser means is again constituted by a vertical rod 8 of preset length that again supports, at its lowermost end, the self-centering adapter body 4, whereas at its upper end it supports a transverse sleeve 11 that is rigidly coupled thereto; a pin 13 can be inserted and locked inside said sleeve 11 with conventional elements, for example a through presser screw 12; said pin protrudes radially from a collar 14 that is rigidly fitted on the conventional vertical rod 15, which supports the bead extractor tool 16 on the tire removing machine 2.

The rod 8 has a polygonal, generally square, cross-section, to form a coupling with a single degree of axial freedom with the corresponding hole of the vertical sleeve 9, which also has a polygonal square cross-section.

The supporting means of said sleeve can be provided in various manners; a first one provides for an arm 17 shaped like an inverted L, whose upright 17a is rotationally articulated in a cylindrical seat 18 that is rigidly coupled to the footing of the tire removing machine 2; the transverse part 17b supports the vertical sleeve 9 at its free end, which cantilevers out.

In a further possible embodiment, said supporting means are constituted by an extension 19a of said conventional arm 19 that supports the bead extractor 16 of the tire removing machine 2; the sleeve 9 is mounted rigidly and at right angles at the end of said arm.

The self-centering adapter 4 for use on normal wheels is substantially constituted by a plurality of disks 4a that have gradually decreasing diameters starting, in the configuration for use, from an upper maximum one to a lower minimum one; said disks are coaxially assembled so as to form a pack or are obtained monolithically from a solid body, whereas for use on so-called "blind" wheels, i.e. wheels that do not have the central hole for the hub, said adapter is constituted by a concave dome 4c that can be fitted over the central portion of said wheel.

Finally, the clearance signal-producing devices 7 can be constituted either by a microswitch 20 or by a pneumatic valve, both of which can be positioned on the upper face of the disk 4a that has the largest diameter and are adapted to be activated, during the intervention of the adapter 4, by a collar 21 that is in turn loosely supported above the disks 4a, with the interposition of conventional elastic contrast means 22, by said rod 8.

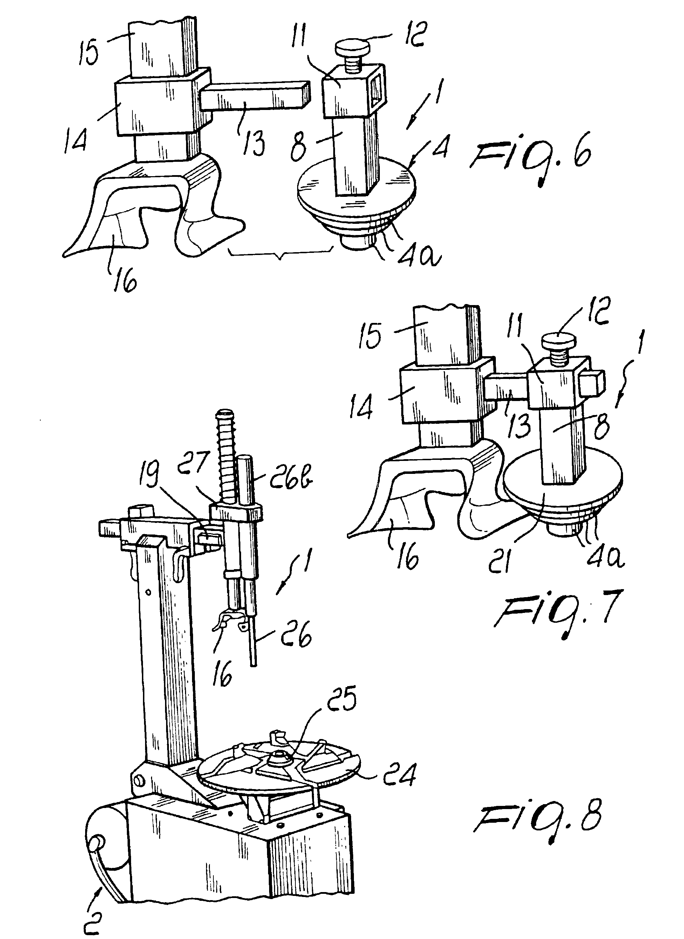

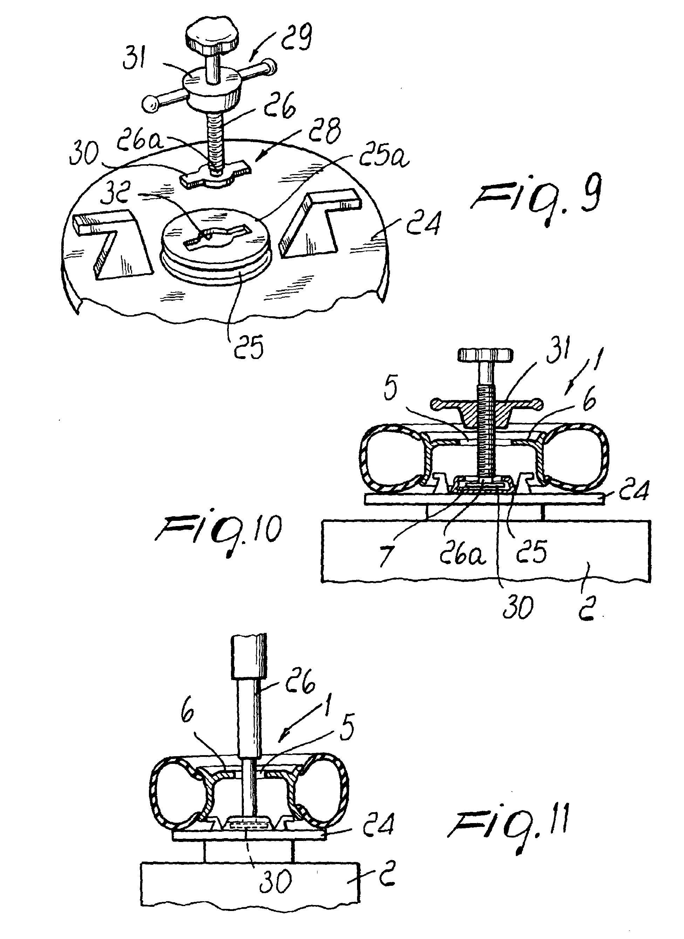

In the embodiment of figures 8 to 11 the burst protection device for tire removing machines 2 comprises a female cylindrical element 25 that is fitted centrally, so as to partially protrude upward, on the platform 24 for the conventional resting and retention of the wheels 6 on the machine 2.

The female element 25 is provided, in an upward region, with a diaphragm 25a that partially closes its open region and is crossed by a shaped opening 32, through which it is possible to coaxially insert the corresponding end 26a of a straight rod 26 that is adapted to pass at right angles through the wheel 6 in the hub hole 5. The rod 26 is provided, at said end 26a, with a means 28 for quick coupling to the female element 25; said means can be activated by turning through a small angle; said rod 26 can be provided, at the opposite end with respect to the means 28, with an element 29 for pressing the wheel 6 through which it passes.

In the preferred embodiment, the female cylindrical element 25 is constituted by a short stub that is rigidly and concentrically mounted on said platform 24 with its lower base, its upper base being constituted by said diaphragm 25a through which said shaped opening 32 is provided.

Said quick coupling means 28 is constituted by a plate 30 that is welded to the lower end of the rod 26 and is arranged transversely at right angles thereto; its perimeter is shaped so as to duplicate the profile of the shaped opening 32, whereas its thickness is slightly lower than the total height of the stub that constitutes the female element 25, so as to be able to rotate inside said female element when the end 26a of the rod 26 enters it in the intervention configuration, just below the diaphragm 25a.

The presser element 29 is constituted, in a first possible manually-actuated embodiment of the device 1, by a conical sleeve 31 that is internally threaded and can be screwed, so that its tapered portion is directed toward the hole 5 of the wheel 6, onto a corresponding complementary thread formed at the upper end of the rod 26.

In an alternative automatically-actuated embodiment of the presser element 29, said presser is constituted by the rod 26, which in this case has a fluid-actuated telescopic structure, whose base 26a is associated with the arm 19 that supports the bead extractor tool 16, for example with a flange 27.

The telescoping elements (or segments) are adapted to extend vertically downward, see figure 11, by passing through the central hole 5 of the wheel 6 arranged on the platform 24, until they again engage the cylindrical female element 25 with the end 26a.

The operation of the invention is as follows: if it is necessary to reinstall a tire 23 on the corresponding wheel 6 placed on the platform 24 of the tire removing machine 2, normally one proceeds by using the tool 16, which reinserts the sidewalls of the tire inside the keying rims 6a.

After completing this operation, the presser means 3 is activated, and more precisely the self-centering adapter 4 is placed in the central hole 5 of the wheel 6 (or the dome 4c is placed in contact with the central part of the blind wheel); automatically, the disk 4a whose diameter matches that of said hole 5 engages said hole snugly, preventing transverse movements thereof and leaving the smaller disks 4a inside the wheel and the larger ones outside.

The adapter 4 is supported by the prism-shaped rod 8, which in a first possible embodiment of the device 1 is slideably mounted inside the vertical sleeve 9, which can in turn be rigidly supported either by the appropriately provided rotating arm 17 or by the axial extension 19a of said arm 19 that supports the bead extractor tool 16, or again be rigidly coupled to one side thereof.

The simplified solution shown in figures 6 and 7 shows that the device 1 can be applied directly on said tool supporting rod 15, by inserting and locking, or removing, the sleeve 11 on and from the pin 13 in each instance.

In all of the above-described cases, the device 1 is usually used as an alternative to, and after, the tool 16.

Once the adapter 4 has been positioned, the sliding of the prism-like rod 8 in the corresponding sleeve 9 is locked by acting on the clamp 10 (or by activating the equivalent fluid-actuated clamping unit), or the sliding of the sleeve 11 on the pin 13 is locked by means of the screw 12: in this manner, the wheel 6 remains rigidly pressed on the platform 24 of the machine, which therefore contributes with all the structure to the pressure applied to said wheel, which can thus be reinflated in full safety, even reaching considerable pressure peaks, as usually required in the action for the so-called bead seating of tubeless tires, and for wheels provided with a bead retention profile.

It is noted that when the adapter 4 enters the axial hole 5 of the wheel 6, the elastic means 22 gives, since it is compressed between the collar 21 and the uppermost disk 4a: said collar can thus activate, by compression, the microswitch 20 or the equivalent pneumatic valve throughout the period of use of the adapter 4, generating the electrical/pneumatic clearance signal for the normal operation of the inflator with which the tire removing machine 2 is equipped; said clearance signal would instead be missing if the adapter 4, and therefore the protection device 1, were not used prior to reinflation of the tire 23.

The operation in the embodiment of figures 8 to 11 is as follows: a wheel 6, fitted with a tire, is arranged on the platform 24 and an operator performs its deflation, bead extraction, and bead reinsertion by using the tool 16 in a conventional manner.

When the tire is to be reinflated, the tool 16 is retracted upward and the operator first locks the wheel by using the wheel locking means 1.

If said device is manually actuated, as shown in figure 10, the operator holds the rod 26 in his hand and inserts the plate 30 in the female element 25, passing through the diaphragm 25a, passing intothe opening 32, and then turning the rod 26 so that the plate 30 is not aligned with respect to the opening 32, thus locking said rod, on the thread whereof the conical sleeve 31 is screwed until its tapered portion engages the central hole 5 of the wheel 6, locking said wheel on the platform 24.

The sensor, of a conventional type, (constituting in this embodiment the clearance signal-producing means 7), is placed inside the female element 25; when locking is completed, said sensor provides the clearance signal that allows the pneumatic elements of the machine to supply the air required to reinflate the tire.

Likewise, if the embodiment of the device 1 is instead automatic, said rod 26 has a telescopic structure and is associated with the same arm 19 that supports the bead extractor tool 16.

After lifting said tool from the interaction position, after the operator has performed the various operations on the tire, before reinflating it he activates the fluid-actuated actuator with which the tire removing machine 2 is equipped; said actuator supplies the segments that compose the rod 26, extracting them until the end 26a thereof enters the female element 25; in this embodiment, the presence of the plate 30 is optional.

Once insertion has been completed, said sensor located inside the female element 25 provides the clearance signal, as described earlier, for proceeding with reinflation of the tire.

In this embodiment, the protection device 1 prevents, in case of a burst, movements of the wheel 6 transversely to the rod 25, although vertical ones are possible only along the length of the rod.

It has thus been observed that the described invention achieves the intended aim.

The invention thus conceived is susceptible of numerous modifications and variations, all of which are within the scope of the claims.

In the practical execution of the invention, the materials used, as well as the shapes and the dimensions, may be any according to the requirements without thereby abandoning the scope of the protection of the claims that follow.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tire removing machine (2) of the type having a frame supporting a platform (24), on which a wheel (6) is locatable, an arm (19) supporting a bead extractor (16), and a burst protection device comprising:
- a wheel locking means (1) for centering and fixing a wheel (6) on said platform (24); and
- a clearance signal-producing device (7) being actuatable upon fixing of the wheel (6) on said platform (24) through said wheel locking means (1), said signal-producing device (7) controlling operation of the machine in only an active intervention stage of said wheel locking means (1), **characterized in that** said wheel locking means (1) comprises: a rod (8) positionable axially at the center of said wheel (6) located on said platform (24); and a presser element (3) operatively connected to said rod (8) to engage said wheel axially, whereby to retain the wheel in a centering manner only at the central axis region thereof, said clearance signal-producing device (7) being actuated by the end (4a) of said rod (8) and only upon active engagement thereof with said wheel (6) and/or said platform (24),
**in that** said rod (8) and presser element (3) can be fitted, with corresponding elements, on said machine (2), said presser element (3) being equipped with a self-centering adapter body (4) and with said clearance signal-producing device (7),
**in that** said locking means (1) is constituted by said rod (8) that is mounted, so that it is slidingly guided, in a vertical sleeve (9) which is in turn supported by corresponding supporting means (17) associated with said machine (2), said rod (8) supporting said self-centering adapter body (4) at its lowermost end, conventional locking devices (10) for locking the rod (8) in the sleeve (9) being further provided, and
**in that** said means for supporting said sleeve are constituted by an arm (17) that is shaped like an inverted L, the upright (17a) of which is rotatably articulated in a cylindrical seat (18) rigidly coupled to the footing of the tire removing machine (2) and the transverse portion (17b) of which supports said vertical sleeve (9) at the free end, which cantilevers out.

2. The tire removing machine according to claim 1, **characterized in that** said rod (8) has a polygonal cross-section for coupling with a single degree of freedom to the corresponding axial hole of said vertical sleeve (9), which also has a polygonal cross-section.

3. The tire removing machine according to claim 1, **characterized in that** said self-centering adapter body (4) is constituted by a plurality of disks (4a) whose diameters decrease gradually from an upper maximum one to a lower minimum one, said disks (4a) being coaxially assembled in a pack, or being monolithically formed from a solid body, said adapter being snugly insertable coaxially in the central hole (5) of a wheel (6) that is provided for the adaptation thereof to the hub.

4. The tire removing machine according to claims 1 or 3, **characterized in that** said self-centering adapter (4) is constituted by a concave dome (4c) that is suitable to fit above the central region of a blind wheel (6).

5. The tire removing machine according to claims 1 and 3, **characterized in that** said clearance signal-producing device (7) is constituted by a microswitch (20) that is arranged on the upper face of the larger-diameter disk and is adapted to be pressed during the intervention of the adapter by a collar (21) that is supported loosely in an upward region, with conventional elastic contrast means (22) interposed, by said rod (8).

## Patentansprüche

1. Eine Reifendemontiermaschine (2) mit einem Rahmen, der eine Plattform (24) hält, auf der ein Rad (6) angeordnet werden kann, einem Arm (19) der einen Wulstextraktor (16) hält und einer Platzschutzeinrichtung, umfassend: Radblockiereinrichtungen (1) für die Zentrierung und Fixierung eines Rades (6) auf der Plattform (24); und Eine ein Freigabesignal produzierende Einrichtung (7), die durch die Fixierung des Rades (6) auf der Plattform (24) durch die Radblockiereinrichtungen (1) betätigbar ist, wobei die signalproduzierende Einrichtung (7) den Betrieb der Maschine nur in einer aktiven Interventionsphase der Radblockiereinrichtungen (1) kontrolliert, **dadurch gekennzeichnet, dass** die Blockiereinrichtungen (1) umfassen: einen Stab (8), der axial in der Mitte des Rades (6) zu positionieren ist, welches sich auf der Plattform (24) befindet; und ein Presselement (3), das im Betrieb mit dem Stab (8) verbunden ist, um axial in das Rad einzugreifen, wodurch das Rad in zentrierter Weise nur im zentralen Achsenbereich desselben zurückgehalten wird, wobei die das Freigabesignal produzierende Einrichtung (7) durch das Ende (4a) des Stabes (8) und nur bei aktiven Eingriff desselben mit dem Rad (6) und/oder der Plattform (24) betätigt wird, dass der Stab (8) und das Presselement (3) mit korrespondierenden Elementen auf der Maschine (2) befestigt sein können, wobei das Presselement (3) mit einem selbstzentrierenden Adapterkörper (4) versehen ist und mit der das Freigabesignal produzierenden Einrichtung (7), dass die Blockiereinrichtungen (1) durch den Stab (8) gebildet sind, der so montiert ist, dass er gleitend in einer vertikalen Hülle (9) geführt ist, die wiederum durch korrespondierende Halteeinrichtungen (17) gehalten ist, die mit der Maschine (2) verbunden sind, wobei der Stab (8), der den selbstzentrierenden Adapterkörper (4) an seinem untersten Ende hält, wobei weiterhin herkömmliche Blockiereinrichtungen (10) zur Blockierung des Stabes (8) in der Hülle (9) vorgesehen sind, und dass die Einrichtungen zur Halterung der Hülle durch einen Arm gebilder (17) werden, der wie ein umgekehrtes L ausgebildet ist, wobei der senkrechte Teil (17a) desselben drehbar in einem zylindrischen Sitz (18) angelenkt ist, der fest mit dem Unterbau der Reifendemontiermaschine (2) gekoppelt ist und dessen seitlicher Bereich (17b) die vertikale Hülle (9) an dem freien Ende trägt , das freitragend nach außen vorragt.

2. Reifendemontiermaschine nach Anspruch 1, **dadurch gekennzeichnet, dass** der Stab (8) einen polygonalen Querschnitt zur Kopplung mit einem einfachen Freiheitsgrad mit der korrespondierenden Axialbohrung der vertikalen Hülle (9) hat, die ebenfalls einen polygonalen Querschnitt aufweist.

3. Reifendemontiermaschine nach Anspruch 1, **dadurch gekennzeichnet, dass** der selbstzentrierende Adapterkörper (4) durch eine Vielzahl von Scheiben (4a) gebildet ist, deren Durchmesser nach und nach von einem oberen Maximum zu einem unteren Minimum abnimmt, wobei diese Scheiben (4a) koaxial in einem Paket montiert sind, oder monolithisch aus einem festen Körper geformt sind, wobei der Adapter passend koaxial in die zentrale Bohrung (5) eines Rads (6) eingeführt wird, die zur Aufnahme desselben auf die Nabe vorgesehen ist.

4. Reifendemontiermaschine nach Anspruch 1 oder 3, **dadurch gekennzeichnet, dass** der selbstzentrierende Adapter (4) durch einen konkaven Dom (4c) gebildet ist, der geeignet ist, über den zentralen Bereich eines blinden Rads (6) zu passen.

5. Reifendemontiermaschine nach den Ansprüchen 1 und 3, **dadurch gekennzeichnet, dass** die das Freigabesignal produzierende Einrichtung (7) durch einen Mikroschalter (20) gebildet ist, der an der oberen Seite der Scheibe mit größerem Durchmesser vorgesehen ist und so ausgebildet ist, dass er während der Intervention des Adapters durch einen Kragen (21), der lose im oberen Bereich gehalten ist, mit herkömmlichen elastischen dazwischen angeordneten Kontrasteinrichtungen (22), durch den Stab (8) zusammengepresst wird.

## Revendications

1. Machine de démontage de pneumatique (2) du type ayant un bâti qui supporte une plate-forme (24), sur laquelle on peut placer une roue (6), un bras (19) qui supporte un extracteur de talon (16), et un dispositif de protection en cas d'éclatement comprenant :
un mécanisme de blocage de roue (1) pour centrer et fixer une roue (6) sur la dite plate-forme (24) ; et
un dispositif de génération de signal d'autorisation (7) actionnable lors de la fixation de la roue (6) sur la dite plate-forme (24) par les dits moyens de blocage de roue (1), le dit dispositif de génération de signal (7) commandant le fonctionnement de la machine seulement à un stade d'intervention active des dits moyens de blocage de roue (1),
**caractérisé en ce que** les dits moyens de blocage de roue (1) comprennent :
une tige (8) positionnable axialement au centre de la dite roue (6) placée sur la dite plate-forme (24) ; et
un élément de pression (3) fonctionnellement relié à la dite tige (8) pour venir en prise avec la dite roue axialement, afin de retenir la roue d'une manière centrée seulement dans sa région d'axe central, le dit dispositif de génération de signal d'autorisation (7) étant actionné par l'extrémité (4a) de la dite tige (8) et seulement lors de l'engagement actif de celle-ci avec la dite roue (6) et/ou la dite plate-forme (24),
**en ce que** la dite tige (8) et le dit élément de pression (3) peuvent être montés, avec des éléments correspondants, sur la dite machine (2), le dit élément de pression (3) étant équipé d'un corps d'adaptateur à auto-centrage (4) et du dit dispositif de génération de signal d'autorisation (7),
**en ce que** les dits moyens de blocage de roue (1) sont constitués par la dite lige (8) qui est montée, afin d'être guidée de façon coulissante, dans un manchon vertical (9) qui est lui-même supporté par des moyens de support correspondants (17) associés à la dite machine (2), la dite tige (8) supportant le dit corps d'adaptateur à auto-centrage (4) à son extrémité inférieure, des dispositifs de blocage usuels (10) étant en outre prévus pour bloquer la tige (8) dans le manchon (9), et
**en ce que** lesdits moyens de support du dit manchon sont constitués par un bras (17) qui est en forme de L inversé dont la branche montante (17a) est articulée en rotation dans un siège cylindrique (18) rigidement relié à la base de la machine de démontage de pneumatique (2) et dont la branche transversale (17b) supporte le dit manchon vertical (9) à l'extrémité libre, en porte à faux vers l'extérieur.

2. Machine de démontage de pneumatique selon la revendication 1, **caractérisée en ce que** la dite tige (8) a une section transversale polygonale pour couplage, avec un seul degré de liberté, au trou axial correspondant du dit manchon vertical (9) qui a également une section transversale polygonale.

3. Machine de démontage de pneumatique selon la revendication 1, **caractérisée en ce que** le dit corps d'adaptateur à auto-centrage (4) est constitué par une pluralité de disques (4a) dont les diamètres diminuent progressivement d'un diamètre supérieur maximal à un diamètre inférieur minimal, les dits disques (4a) étant coaxialement assemblés en un bloc, ou étant formés de façon monobloc à partir d'un corps plein, le dit adaptateur pouvant être inséré à frottement doux coaxialement dans le trou central (5) d'une roue (6) qui est prévu pour l'adaptation de celle-ci au moyeu.

4. Machine de démontage de pneumatique selon les revendications 1 ou 3, **caractérisée en ce que** le dit adaptateur à auto-centrage (4) est constitué par un dôme concave (4c) qui est prévu pour s'ajuster au-dessus de la région centrale d'une roue aveugle (6),

5. Machine de démontage de pneumatique selon les revendications 1 et 3, **caractérisée en ce que** le dit dispositif de génération de signal d'autorisation (7) est constitué par un microcontact (20) qui est agencé sur la face supérieure du disque de plus grand diamètre et qui est prévu pour être pressé pendant l'intervention de l'adaptateur par un collier (21) qui est supporté librement dans une région supérieure, avec interposition de moyens antagonistes élastiques usuels (22), par la dite tige (8).
